# EUROPÄISCHE PATENTSCHRIFT

(11) **EP 3 420 745 B1**
(45) Veröffentlichungstag und Bekanntmachung des Hinweises auf die Patenterteilung: **07.06.2023**
(21) Anmeldenummer: 17706229.6
(22) Anmeldetag: 20.02.2017
(51) Int. Cl.: H04W 24/08, H04W 84/12

(54) **SYSTEM ZUM MONITORING, ÜBERWACHUNG, LEISTUNGSANALYSE UND/ODER STÖRUNGSSUCHE IN WLANS**
SYSTEM FOR MONITORING, CONTROLLING, ANALYZING PERFORMANCE AND/OR TRACING MALFUNCTIONS IN WLANS
SYSTÈME POUR ASSURER LE CONTRÔLE, LA SURVEILLANCE ET L'ANALYSE DE CAPACITÉ ET/OU LE DÉPISTAGE DE PANNES DANS DES RÉSEAUX WLAN

(30) Priorität: 26.02.2016 DE 102016103435; 09.02.2017 DE 102017102627
(43) Veröffentlichungstag der Anmeldung: 02.01.2019
(73) Patentinhaber: GHMT AG, 66450 Bexbach (DE)
(72) Erfinder: LINDNER, Frank, 66871 Herchweiler (DE); SHYFRYN, Viachaslau, 66538 Neunkirchen (DE); HEISSLER, Sascha, 66564 Ottweiler (DE); WILHELM, Dirk, 66892 Bruchmühlbach-Miesau (DE)
(74) Vertreter: Meissner Bolte Partnerschaft mbB
(86) Internationale Anmeldenummer: PCT/EP2017/053746
(87) Internationale Veröffentlichungsnummer: WO 2017/144397

(56) Entgegenhaltungen:
- WO-A2-2004/051868
- US-A1- 2009 235 354
- US-A1- 2010 020 707
- US-A1- 2010 246 416
- US-A1- 2015 222 507
- US-B1- 7 155 167
- Version 7 Tamosoft: "CommView for WiFi - Wireless Network Monitor and Analyzer for Microsoft Windows - Help Documentation Contents", , 15 November 2013 (2013-11-15), pages 1-108, XP055684785, Retrieved from the Internet: URL:https://www.tamos.com/docs/cv65.pdf [retrieved on 2020-04-09]
- Metageek: "Chanalyzer Pro", , 19 January 2015 (2015-01-19), pages 1-32, XP055684770, Retrieved from the Internet: URL:https://www.4gon.co.uk/documents/meeta geek_chanalyzer_pro_user_guide.pdf [retrieved on 2020-04-09]
- E Quanta Computer Inc: "GD5", , 25 October 2012 (2012-10-25), pages 1-41, XP055684772, Retrieved from the Internet: URL:https://www.google.com/url?sa=t&rct=j& q=&esrc=s&source=web&cd=1&ved=2ahUKEwjvqJi -oOroAhXJCOwKHZgDC6oQFjAAegQIARAB&url=http s%3A%2F%2Flaptopblue.vn%2Fdownload3.php%3F id%3D1673&usg=AOvVaw1wSpmRlJHZqfBnyx0fRJJv [retrieved on 2020-04-09]

## Beschreibung

Die Erfindung betrifft ein System zum Monitoring, Überwachung, Leistungsanalyse und/oder Störungssuche in standardisierten Funknetzen mittels Aufnehmen des Datenaustausches einer Mindestanzahl von im jeweiligen Funknetz verfügbaren Kanälen, wobei bezogen auf den Datenaustausch mindestens die Kanalauslastung und/oder die Anzahl von Kanalwechseln und/oder die Anzahl der Clients und/oder die Anzahl von Paketwiederholungen bewertet wird gemäß Anspruch 1.

Die Übertragung von Daten mittels Funknetzen, insbesondere in automatisierungstechnischen Anlagen und Systemen, erfreut sich zunehmender Beliebtheit. Mit steigender Anzahl der Nutzer und wachsenden Anforderungen an die Bandbreite sowie die Antwort- und Übertragungszeiten und vor allem mit steigender Relevanz für Geschäftsprozesse ergeben sich erhebliche Anforderungen an die Qualität und die Leistungsbereitschaft des jeweiligen Funknetzes. Dies bedeutet, dass sowohl bei der Einführung von Funknetzen als auch im späteren Funknetzbetrieb eine Diagnose und Fehleranalyse sowie eine dauerhafte Überwachung zumindestens an kritischen Positionen sinnvoll ist.

Dabei müssen sowohl die Anwendungsszenarien als auch die Anwendergruppen berücksichtigt werden. Weiterhin muss ein System zur Funknetzüberwachung in der Lage sein, Anforderungen, die aus hochfrequenztechnischer und protokolltechnischer Hinsicht an das System zu stellen sind, im späteren Betrieb zu überprüfen.

Für viele Funktechnologien stellen Hardware-Hersteller sogenannte Monitoring Systeme zur Verfügung.

Bekannte Lösungen zum Monitoring von IEEE 802.11-Netzwerken lassen zwar eine Visualisierung und Auswertung der empfangenen Daten in einem großen Umfang zu, jedoch sind die Möglichkeiten der eingesetzten Hardware (WLAN-Access Points) beschränkt. Die Access Points besitzen in der Regel ein bis zwei Funk-Interfaces und müssen entweder die relevanten Kanäle scannen oder können nur auf dem eingestellten Kanal Daten aufnehmen. Darüber hinaus müssen diese verkabelt und mit Energie versorgt werden, was kostspielig ist und die Flexibilität einer solchen Lösung einschränkt. Ein derartiges System ist beispielsweise in der WO 2004/051868 A2 beschrieben. Ferner ist als Lösung der genannten Art die Software-Suite CommView^{®} von TamoSoft bekannt, die über einen USB-basierten Spektrums-Analyzer die Diagnose von drahtlosen Netzwerken ermöglicht.

Spezialisierte Monitoring Systeme unabhängiger Hersteller, die nicht auf den WLAN-Access Points basieren, haben zwar die Möglichkeit der Aufnahme mehrerer WLAN-Kanäle, sind aber teuer und im vollen Umfang nur in Verbindung mit spezieller Software nutzbar.

Im Unterschied zur drahtgebundenen Kommunikation über Feldbusse oder Ethernet-Netzwerke wird bei der Funkkommunikation von verschiedenen Technologien und Anwendern das gleiche Medium belegt. Des Weiteren ist das Verhalten der Netzwerkknoten durch Bewegung sowie externer Einflüsse sehr dynamisch. Sporadische, seltene und schwer nachvollziehbare Störungen sind ein typischer Fall für Funknetzwerke. Durch eine relativ geringe Sendeleistung der Geräte kann die Analyse in den meisten Fälle nur in der näheren Umgebung der betroffenen Geräte und mit großem Aufwand erfolgen.

Bekannte Client-basierte Systeme scannen entweder über mehrere Kanäle und unterliegen dadurch einem Datenverlust oder erfassen nur wenige Kanäle und können somit nicht alle relevanten Ereignisse aufnehmen. Bei Infrastruktur-basierten Systemen ist ein Zugriff auf das Netzwerkmanagement erforderlich, was in vielen Fällen nicht gewünscht wird oder nicht möglich ist. In größeren Netzwerken wird das Netzwerkmanagement zudem mit der Datenmenge, die sich aus den Monitoring-Aufgaben ergibt, schnell überfordert.

So zeigt beispielsweise die US 2015/222507 A1 ein Verfahren zur Minimierung von Störungen innerhalb eines Frames eines Funknetzes, wobei das Funknetz aus mehreren Zellen, Teilnehmern und Basisstationen besteht, die in zugewiesenen Time Slots Informationen austauschen.

Die US 2009/235354 A1 geht davon aus, spezielle Kanallisten in einer Funknetzplanungsphase zu erstellen. Bei Änderungen des Funknetzes, die im Betrieb erfolgen, ist in diesem Dokument offenbart, aus im Betriebszustand des Mobilfunksystems gewonnenen Messdaten eine Änderung der Zuweisung der Funkkanäle vorzunehmen, wodurch eine gewisse adaptive Ausgestaltung des dortigen Systems möglich ist.

Bei der DE 10 2006 044 462 B4 werden Informationen zwischen den Zugangspunkten bzw. Access Points und den Teilnehmern ausgetauscht zum Zweck einer Optimierung der Kanalzuordnung.

Gemäß der US 5 933 420 ist ein Verfahren zur Reduzierung von Störungen in einem Netzwerk vorbekannt, wobei das Netzwerk mehrere Kanäle und mehrere Zugangspunkte aufweist. Es erfolgt eine Kommunikation zwischen den Zugangspunkten und den Kanälen. Durch Auswertung dieser Kommunikation wird eine Kanalzuweisung vorgenommen, die einen störungsärmeren Datenaustausch ermöglicht. Eine dynamische Kanalzuweisung ist auch in der US 6 977 912 B1 erläutert.

Aus dem Vorgenannten ist es daher Aufgabe der Erfindung, ein System zu schaffen, mit dessen Hilfe vor Ort ein Monitoring, eine Überwachung, eine Leistungsanalyse und/oder eine Störungssuche in standardisierten Funknetzen mittels Aufnehmen des Datenaustausches einer Mindestanzahl von im jeweiligen Funknetz verfügbaren Kanälen möglich ist. Dabei soll der jeweilige Nutzer eines Funknetzes, insbesondere in einer industriellen Umgebung, vor Ort, auch über einen längeren Zeitraum, das heißt zur Langzeitanalyse die Funkkommunikation verlustfrei und lückenlos überwachen kann, um dann nach einer signifikanten Überwachungsdauer zu ermitteln, welche Qualität das zur Verfügung stehende Netz hinsichtlich seiner Kommunikationseigenschaften besitzt, ob noch Funknetz-Ressourcen vorhanden sind. Das erfindungsgemäße System soll also einen Support für die Anwender zur Entstörung von deren Funksystemen ermöglichen und insofern über die Beschränkungen bisheriger Einrichtungen hinausreichen.

Des Weiteren soll das System ein Aufrufen und eine Analyse der Funkkommunikation in einem Störungsfall ermöglichen, selbst wenn eine Störung sehr sporadisch auftritt und diese seit Tagen oder Wochen später gemeldet wird.

Die Lösung der Aufgabe der Erfindung erfolgt mit einem System zum Monitoring, Überwachung, Leistungsanalyse und/oder Störungssuche in standardisierten Funknetzen gemäß der Merkmalskombination nach Anspruch 1, wobei die Unteransprüche mindestens zweckmäßige Ausgestaltungen und Weiterbildungen bzw. Verwendungen umfassen.

Der Grundgedanke bei dem erfindungsgemäßen System liegt demgemäß darin, Langzeitanalysen zur Ermittlung von Langzeitstatistiken sowie ein Erfassen von sporadischen Störungen zu ermöglichen. Hierdurch ist einerseits eine Früherkennung von Engpässen im jeweiligen Netz möglich sowie die Störungssuche verbessert. Dabei wird eine Protokoll-Analyse aller relevanten WLAN-Kanäle verlustfrei vorgenommen. Ergänzend erfolgt eine Echtzeit-Spektrum-Analyse zeitsynchron mit der Protokoll-Analyse und ein Loggen von erkannten Funkteilnehmern bzw. weiteren im Funknetz eingebundenen Einrichtungen.

Das System ist in der Lage, eigene Software zur Traffic-Analyse zu laden und mittels Webserver eine Visualisierung vorzunehmen. Bei Bedarf kann eine live"-Analyse über Remote-Desktop oder Download von relevanten Trace-Ausschnitten erfolgen.

Das System ist als mobile, tragbare Einheit ausgebildet und kann insofern in einem autarken Gehäuse, geschützt vor Witterungseinflüssen untergebracht werden, um eine Daueraufnahme des Datenverkehrs vor Ort beim Kunden zu ermöglichen. In Weiterbildung der Erfindung kann die tragbare Einheit über eine integrierte, autarke Stromversorgung verfügen.

Bei Bedarf besteht die Möglichkeit, einen Fernzugriff auf das System vorzusehen. Mehrere erfindungsgemäße Systeme mit mobiler, tragbarer Einheit können zum Beispiel in industrieller Umgebung an verschiedenen Orten aufgestellt und zur verteilten Überwachung eingesetzt werden, wobei die einzelnen Systeme miteinander kommunizieren und Daten austauschen können.

Das erfindungsgemäße System ist also als mobile, tragbare Einheit ausgebildet, welche mehrere Hochfrequenz-Empfänger aufweist, welche alle verfügbaren oder vom System als relevant erkannten Funkkanäle abdecken.

Die Empfänger sind diesbezüglich mit Antennen ausgestattet, die für relevante Frequenzbereiche optimiert sind.

Die Empfänger können passiv ausgeführt, aber auch aktiv ausgestaltet werden. Im Falle einer aktiven Ausgestaltung verfügen die Empfänger über rauscharme Verstärker (LNA) und optional über Bandpassfilter, zum Beispiel im Bereich von 2,4 bis 2,5 GHz, 5,1 bis 5,9 GHz usw. je nach dem relevanten Frequenzband.

Die Einheit umfasst weiterhin mindestens einen Adapter, welcher die hochfrequenten Signale verarbeitet, d.h. die von den Hochfrequenz-Empfängern aufgenommenen Daten oder Datenpakete aufbereitet und als Traffic-Daten einem Massenspeicher eines integrierten Computers bzw. Rechners übergibt.

Die aufgenommenen, gespeicherten Traffic-Daten werden einer statistischen Auswertung nach vorgebbaren Kennwerten unterworfen. Die Auswertungsergebnisse werden mit hoher zeitlicher Auflösung in einer systemimmanenten Datenbank abgelegt, wobei bei erkannten Auffälligkeiten der Datenverkehr bzw. die Traffic-Daten um den Auffälligkeitszeitpunkt herum abgerufen und zur weiteren Analyse bereitgestellt werden.

In Weiterbildung der Erfindung ist das System im dynamischen, statischen oder aber auch in einem Überwachungsmodus betreibbar.

Im dynamischen Modus wird nach dem Erkennen relevanter Funknetzkanäle nach dem Hochfahren des Systems mittels eines WLAN-Adapters ein Scannen der Luftschnittstelle vorgenommen und überprüft, ob und welche Änderungen in den verwendeten Kanälen vorgenommen. wurden, um eine Anpassung der Kanalauswahl und deren Einstellung vorzunehmen.

Im statischen Modus werden grundsätzlich alle im zu überwachenden Funknetz vorhandenen Kanäle aufgenommen.

Im Überwachungsmodus wird die Aufnahme des Traffics anhand einer vorgegebenen Liste von Access Points oder Clients nebst deren Priorisierung realisiert.

Die vorgebbaren Kennwerte umfassen beispielsweise Infrastrukturstatistiken wie Auslastung der Funkkanäle, stattgefundene Kanalwechsel, Anzahl der Clients pro Access Point, Anzahl der gleichzeitig aktiven Clients oder ähnliches. Weiterhin können die Kennwerte Client-Statistiken, aufgeteilt nach Up- und Downlink umfassen, und zwar die Belegung der Funkkanäle durch jeden einzelnen Client, die prozentuale Anzahl der Paketwiederholungen bei den Clients, die Bewertung des Management-Traffics pro Client und ähnliches.

Diese Kennwerte können in einer frei definierbaren zeitlichen Auflösung ermittelt (z.B. für jede Sekunde) und in einer Datenbank abgelegt werden, so dass diese jederzeit sehr schnell zur Visualisierung oder Ableitung weiterer Kennwerte aufgerufen werden können. Die abgeleiteten Kennwerte können in Form von frei definierbaren Reports in regelmäßigen Abständen zur Verfügung gestellt werden. Stellt man dabei eine Auffälligkeit fest, so kann der relevante Trace-Abschnitt vom System aufbereitet und zum Download gestellt werden.

In einer Ausgestaltung der Erfindung werden für alle oder ausgewählte Clients anhand von Erfahrungswerten abgeleitete Fehler, das heißt sogenannte Traps geloggt. Hierzu gehören beispielsweise die Unterbrechung der Kommunikation, der Wechsel von Access Points (Roaming), mehrfaches Roaming innerhalb eines vorgegebenen Zeitintervalls, nicht erfolgreiches Roaming, Auffälligkeiten bei der Übertragung eines definierten Test-Traffics und ähnliches.

In einer Ausgestaltung der Erfindung sind in die Datenbank kundenspezifische Informationen importierbar. Dazu können zum Beispiel MAC-Adressen, Namen und andere zugehörige Informationen von relevanten Access Points und Clients gehören sowie eine Logging-Statistik von weiteren Überwachungssystemen wie WLAN-Controllern, Logging der Anlagen, der Endgeräte oder spezieller Applikationen.

Mit Hilfe des erfindungsgemäßen Systems ist eine Langzeitstatistik erstellbar, woraus eine Trendanalyse erfolgt und eine Prädiktion möglicher zukünftiger Engpässe oder Problemfälle vorgenommen werden kann.

In Weiterbildung der Erfindung steht das System mit einem echtzeitfähigen Spektrum-Analysator in Verbindung, um über einen vorgegebenen Zeitraum oder anhand von Ereignissen einen Spektrumsverlauf zu ermitteln und aufzuzeichnen.

Über eine oder mehrere Empfängereinheiten besteht die Möglichkeit, fremde Funksysteme und deren Störeinflüsse zu erkennen und mit einem Zeitstempel zu versehen in die Datenbank zu übertragen.

Das System ermöglicht auch eine Analyse von Funknetzauffälligkeiten bei der Übertragung eines im Vorfeld definierten Test-Traffics.

Erfindungsgemäß ist weiterhin die Verwendung des Systems zur Qualifizierung von Funknetzen und Funknetzstandorten sowohl aus der Sicht des Funknetznutzers als auch des Funknetzbetreibers.

Die Erfindung soll nachstehend anhand eines Ausführungsbeispieles sowie unter Zuhilfenahme von Figuren näher erläutert werden.

Hierbei zeigen:
- Fig. 1: ein Blockschaltbild des erfindungsgemäßen Systems zum Monitoring, Überwachung, Leistungsanalyse und/oder Störungssuche in standardisierten Funknetzen;
- Fig. 2: eine Weiterbildung des Hochfrequenzteiles aus Fig. 1, hier als aktives HF-Multibandteil; und
- Fig. 3: eine Weiterbildung des aktiven HF-Teiles in Singleband-Ausführung mit entsprechenden Bandpassfiltern zum Beispiel für die Bereiche 2,4 bis 2,5 GHz und 5,1 bis 5,9 GHz.

Die erfindungsgemäße Lösung gemäß Ausführungsbeispiel ist beispielsweise auf WLAN (IEEE 802.11) ausgerichtet, prinzipiell aber auch auf andere Funkstandards übertragbar.

Das erfindungsgemäße System besitzt mehrere Empfänger, welche alle verfügbaren oder vom System als relevant erkannten Funkkanäle abdecken.

Die Empfänger werden auf die Kanäle eingestellt, was durch den Nutzer aber auch automatisch und adaptiv durch das System erfolgen kann. Das System zeichnet verlustfrei den gesamten Funkverkehr auf den Kanälen auf. Die aufgenommenen Datenpakete werden komplett oder mit den aus Datenschutzgründen zugeschnittenen Nutzinhalten (Paket-Payload) abgespeichert. Das System ermöglicht eine langfristige Analyse mit ausreichender Rechenleistung und Speicherplatz und ist dementsprechend ausgestattet.

Folgende Modi können durch den Nutzer oder durch eine Konfigurationsdatei vorgegeben werden.

Im dynamischen Modus fährt das System hoch, erkennt automatisch relevante Kanäle und stellt das Aufnahmesystem auf diese Kanäle ein. Anschließend scannt ein weiterer WLAN-Adapter die Luftschnittstelle und erkennt, welche Änderungen in den verwendeten Kanälen vorgenommen wurden. Anschließend werden dynamisch die Einstellungen der aufzunehmenden Kanäle angepasst.

Im Überwachungsmodus wird eine Liste von Access Points oder Clients vorgegeben, die für die Analyse relevant ist. Dabei können die angegebenen Geräte priorisiert werden. Die Ergebnisse des Scanvorganges werden in diesem Fall gemäß der vorgegebenen Liste ausgewertet und gewichtet. Anhand der Ergebnisse werden die Kanaleinstellungen der WLAN-Adapter entsprechend angepasst.

Im statischen Modus wird das Aufnahmesystem so konfiguriert, dass alle in dem zu überwachenden WLAN verfügbaren Kanäle aufgenommen werden. Hierfür ist das System mit einer erforderlichen Anzahl von Empfängern ausgestattet.

Durch diese Konfigurationsmöglichkeiten wird eine verlustfreie Aufnahme des Traffics ermöglicht, wobei auf die notwendigen Hardware-Ressourcen zurückgegriffen wird. Das System kann mit allen verfügbaren Überwachungssystemen zeitlich synchronisiert werden, zum Beispiel über das sogenannte NTP-Protokoll.

Die aufgenommenen Traces werden statistisch mit vorgegebenen Kennwerten ausgewertet, wodurch eine Langzeitstatistik der Funkkommunikation gebildet wird. Alle Ergebnisse werden in einer separaten, jedoch systemimmanenten Datenbank mit hoher zeitlicher Auflösung, zum Beispiel im Sekundentakt, abgespeichert.

Zu den relevanten Kennwerten gehören zum Beispiel Infrastrukturstatistiken. Hierunter ist zum Beispiel die Auslastung des Funkkanals, sowohl der von der Infrastruktur in den Managementpaketen gemeldete als auch der tatsächliche, am Standort des Monitoring Systems berechnete Wert zu verstehen, die Anzahl stattgefundener Kanalwechsel, die Anzahl von Clients pro Access Point, die Anzahl gleichzeitig aktivierter Clients oder ähnliches.

Als Kennwerte dienen auch Client-Statistiken, aufgeteilt nach Up- und Downlink, und zwar bezogen auf die Belegung des Funkkanals durch jeden einzelnen Client, der prozentuale Anteil der Paketwiederholungen bei den Clients, die Bewertung des Management-Traffics pro Client usw.

Darüber hinaus werden anhand von Erfahrungswerten abgeleitete Traps geloggt. Hierzu gehören beispielsweise die Unterbrechung der Kommunikation, der Access Point-Wechsel (Roaming), ein mehrfaches Roaming innerhalb eines vorgegebenen Zeitintervalls, ein nicht erfolgreiches Roaming, Auffälligkeiten bei der Übertragung eines definierten Test-Traffics und ähnliches.

Die Traps können entweder für alle Clients geführt werden oder anhand der Liste der relevanten Geräte eingeschränkt werden. Die Traps, die Statistiken und die Auffälligkeiten werden gewichtet und für den Nutzer in einer einfachen, selbsterklärenden Form dargestellt. Dies kann zum Beispiel in Ampelfarben visualisiert werden, wobei Grün für Okay, Gelb für Warnung und Rot für Alarm steht.

Darüber hinaus erlaubt die Datenbank den Import von kundenspezifischen Informationen, wie zum Beispiel MAC-Adressen, Namen und zugehörige Informationen relevanter Access Points und Clients sowie eine Logging-Statistik von anderen Überwachungssystemen.

Durch die verlustfreie Aufnahme, die hohe zeitliche Auflösung der Statistik und die einfache, frei skalierbare Darstellung wird eine Navigation über den gesamten Aufnahmezeitraum ermöglicht.

Stellt man in dieser Navigation eine Auffälligkeit fest, so kann der Datenverkehr um den relevanten Zeitpunkt herum sehr schnell abgerufen und im Detail analysiert und betrachtet werden.

Dieser Datenverkehr wird dem Nutzer als ein sinnvoll gefiltertes Trace zur Verfügung gestellt, das mit einem geringen Aufwand von einem fachkundigen Personal bewertet werden kann.

Dabei kann dieses Trace zur Entschlüsselung tiefer aufbereitet werden. Alternativ können die Nutzdaten der Pakete aus Datenschutzgründen auch bewusst abgeschnitten werden.

Darüber hinaus kann anhand der Statistik ein Management-Report über den Status des überwachten Bereiches nach einstellbaren Kriterien erstellt werden.

Ferner besteht die Möglichkeit, einzelne, als relevant eingestufte Inhalte der Datenbank entsprechend komprimiert, zu extrahieren oder zusammenzuführen. Damit wird eine Langzeitstatistik (24/7 für mehrere Monate) erstellbar.

Anhand dieser Statistik sind Trends ableitbar, mit denen eine Vorhersage möglicher Engpässe oder potenzieller Problemfälle im Sinne einer Störungsvorbeugung erstellbar ist.

Die Datenbank wird auf dem gleichen, fest verbauten oder austauschbaren Datenträger abgelegt, so dass dieser Datenträger in jedem Rechner mit einem entsprechenden Visualisierungssystem lokal oder ferngesteuert über das lokale Netzwerk, Mobilfunkzugang oder ähnliches analysierbar ist.

Ein weiteres Merkmal des erfindungsgemäßen Systems ist die Echt-Zeit-Triggerung.

Diese basiert auf Ereignissen, die folgendermaßen getriggert werden.

Über die Protokoll-Analyse des beschriebenen Monitoring Systems, von einem externen, zeitsynchronen Logging-System, Ereignissen im Funkkanal, die mit einem echtzeitfähigen Spektrum-Analysator aufgenommen werden oder ähnliches. Über diesen Trigger werden Daten, die für einen einstellbaren Zeitraum vorgehalten werden, abgespeichert. Zeitgleich können Statusmeldungen an einen definierten Kreis von Personen gesendet werden. Dies ermöglicht eine zeitnahe Benachrichtigung über relevante Ereignisse und - sofern nötig - eine zeitnahe Intervention durch den Betreiber des Netzwerkes.

Ferner ist eine Ansteuerung des echtzeitfähigen Spektrum-Analysators möglich. Anhand eines einstellbaren Ereignisses, zum Beispiel einer Radarmeldung eines Access Points, einer Meldung über eine Störung oder einen Verbindungsabbruch zu einer Produktionsanlage usw., wird der im relevanten Zeitintervall aufgenommene Spektrumsverlauf zu einer späteren Analyse abgespeichert. Durch einen separaten Sensor erkannte fremde Funksysteme und Störeinflüsse werden mit einem Zeitstempel zu einem späteren Import in die Frequenz management-Datenbank abgelegt.

In einer Ausgestaltung ist das System akkubetrieben und in einem entsprechend robusten Gehäuse untergebracht und kann einen betroffenen Client begleiten, zum Beispiel durch Mitfahren auf einem Stapler, einem fahrerlosen Transportsystem oder sonstigem Fahrzeug und seine Kommunikation dauerhaft aufnehmen und analysieren.

Bei Bedarf kann das System, zum Beispiel über Mobilfunk oder WLAN, jederzeit zur "live"-Analyse ferngesteuert werden.

Das erfindungsgemäße Monitoring System ist flexibel erweiterbar. Die Unterstützung neuer Funkstandards kann durch den Austausch eingesetzter Empfänger jederzeit kurzfristig implementiert werden. Ebenso können weitere Analysefunktionen und detailliertere Statistiken integriert werden.

Zur Abdeckung größerer Flächen können weitere, kleinere Systeme angeschlossen werden, so dass eine Anpassung an unterschiedliche Einsatz- und Umgebungsbedingungen möglich wird, um eine maximale Abdeckung im Funknetz zu erzielen. Die Analyse und der Zugriff auf alle Teilsysteme erfolgt dabei für den Nutzer nach wie vor über einen zentralen Zugangspunkt.

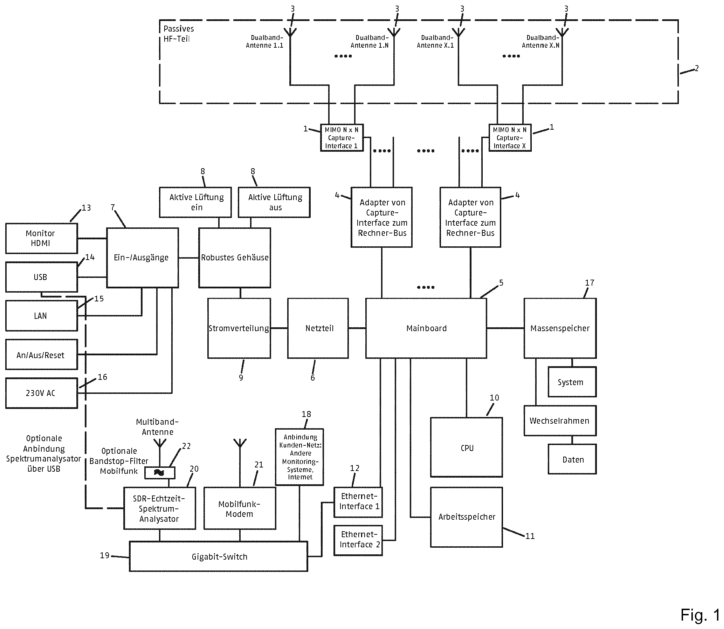

Die Fig. 1 zeigt ein Blockschaltbild des Systems zum Monitoring, Überwachung, Leistungsanalyse und/oder Störungssuche in standardisierten Funknetzen. Das System ist als mobile, tragbare Einheit ausgebildet.

Das System umfasst mehrere HF-Empfänger 1, realisiert als MIM O-Einheiten NxN, auch bezeichnet als Capture-Interface 1 bis X.

Jeder HF-Empfänger 1 steht mit einem Hochfrequenzteil 2 in Verbindung. Das in der Fig. 1 gezeigte passive Hochfrequenzteil 2 weist eine Anzahl von Antennen 3 von 1.1 bis 1.n bzw. X.1 bis X.n auf.

Die Antennen sind bevorzugt als Dualband-Antennen realisiert.

Das jeweilige Capture-Interface 1 bis X führt auf einen Eingang jeweils eines Adapters 4.

Der jeweilige Adapter 4 stellt eine Verbindung zum Mainboard eines Computers 5 her.

Der Computer oder Rechner verfügt darüber hinaus über die üblichen Bestandteile wie ein Netzteil 6, Ein- und Ausgänge 7, eine Lüftereinheit 8, eine Stromverteilung 9, eine CPU 10, einen Arbeitsspeicher 11 und mindestens ein weiteres Interface 12.

An den Ein- und Ausgängen 7 stehen beispielsweise ein HDMI-Anschluss 13, ein USB-Anschluss 14 und ein LAN-Anschluss 15 zur Verfügung. Über einen betreffenden Eingang wird eine Verbindung zum Stromnetz 16 hergestellt.

Die aufgenommenen, gespeicherten Traffic-Daten werden einer statistischen Auswertung nach vorgegebenen oder vorgebbaren Kennwerten unterzogen. Die Auswertungsergebnisse werden mit hoher zeitlicher Auflösung in einer Datenbank eines Massenspeichers 17 abgelegt. Der Massenspeicher kann über geeignete Mittel austauschbar bzw. auswechselbar ausgeführt sein.

Optional kann über das Interface 12 eine Kundennetzanbindung bzw. eine Anbindung an externe Monitoring Systeme 18 vorgenommen werden. Über einen Switch 19 kann ein Echt zeit-Spektrum-Analysator 20 angeschlossen werden. Eine Kommunikation und Steuerung diesbezüglich ist über ein Mobilfunk-Modem 21 möglich.

Zur Erfassung von Störungen kann ein diesbezügliches weiteres Empfängersystem 22 ausgebildet sein.

Bei der Darstellung nach Fig. 1 ist wie erläutert das Hochfrequenzteil 2 passiv ausgebildet.

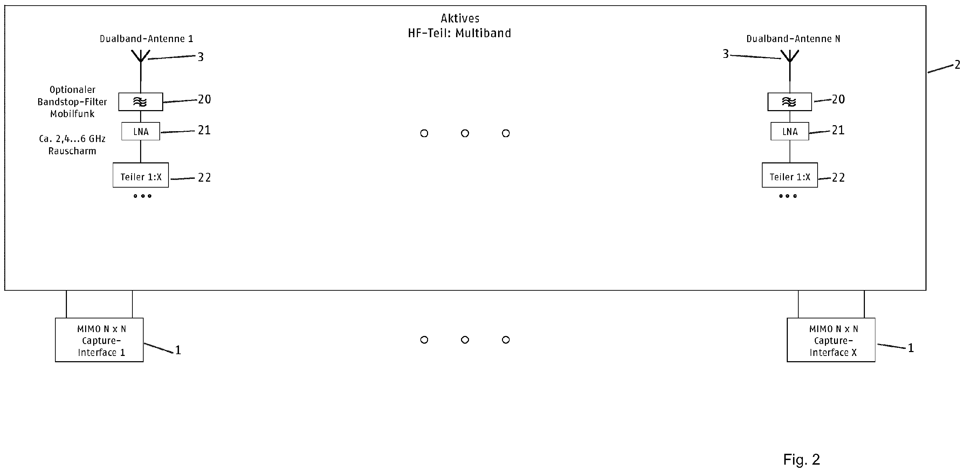

Gemäß der Ausführungsform nach Fig. 2 kann aber auch ein aktives, Multiband-Hochfrequenzteil realisiert werden. In diesem Falle kommen Dualband-Antennen 3 zum Einsatz, welche über einen optionalen Bandpassfilter 20 über einen rauscharmen Verstärker 21 auf einen entsprechenden Teiler 22 führen, dessen Ausgang am jeweiligen Capture-Interface 1 angeschlossen ist.

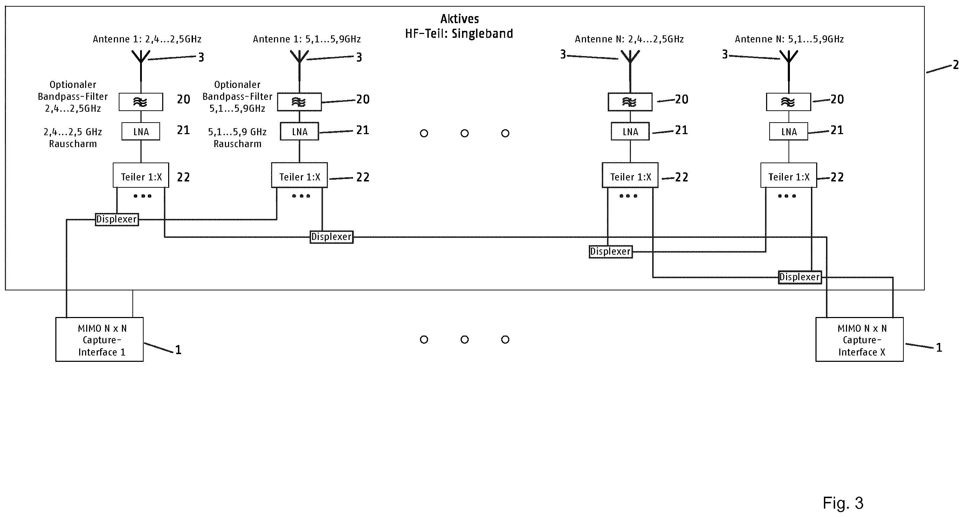

Bei der Darstellung gemäß Fig. 3 werden für jeden Frequenzbereich, zum Beispiel 2,4 bis 2,5 GHz oder 5,1 bis 5,9 GHz spezifische Antennen eingesetzt, wobei auch bei dieser Ausführungsform jede Antenne über einen optionalen Bandpassfilter bezogen auf den jeweiligen Frequenzbereich mit einem frequenzselektiven, rauscharmen Verstärker in Verbindung steht.

Die Ausgänge der Verstärker 21 stehen wiederum mit entsprechenden Teilern 22 in Verbindung, die wiederum auf das jeweilige Capture-Interface 1 führen.

Die Baugruppen mit Ausnahme des Hochfrequenzteiles und der nur optionalen Weiterbildung mit dem Echt zeit-Spektrum-Analysator 20 und Mobilfunk-Modem 21 können in einem vor Umwelteinflüssen geschützten, tragbaren kompakten Gehäuse untergebracht werden, wobei über entsprechend von außen zugängliche Anschlüsse dann das betreffende Hochfrequenzteil 2 anschließbar ist. Durch die Möglichkeit der externen Steuerung oder aber auch des automatisierbaren Monitoring-Ablaufes ist kein Eingriff am bzw. in das Gerät vor Ort nötig, so dass das entsprechende System ohne beim Anwender zu stören oder dessen Aufmerksamkeit auf sich zu ziehen, eingesetzt werden kann.

In einer realisierten Ausführungsform kann das System ein WLAN-Monitoring bis sechzehn Kanälen mit 3x3 MIMO verlustfrei realisieren im Sinne einer verlustfreien Lang zeit-Datenaufnahme und bedarfsweiser "live"-Analyse über Remote-Desktop oder Download relevanter Trace-Ausschnitte.

## Patentansprüche

1. System zum Monitoring, Überwachung, Leistungsanalyse und/oder Störungssuche in standardisierten Funknetzen mittels Aufnehmen des Datenaustausches einer Mindestanzahl von im jeweiligen Funknetz verfügbaren Kanälen, wobei bezogen auf den Datenaustausch mindestens die Kanalauslastung und/oder die Anzahl und/oder Dauer von Kanalwechseln und/oder die Anzahl der Clients und/oder die Anzahl von Paketwiederholungen bewertet wird,
**dadurch gekennzeichnet, dass**
das System als mobile, tragbare Einheit ausgebildet ist, welche eine Anzahl von X Hochfrequenz-Empfängern (1) aufweist, die jeweils ein MIMO NxN Capture Interface (1) aufweisen,
wobei die Hochfrequenz-Empfänger (1) mit einem Hochfrequenzteil (2) in Verbindung stehen, das eine Anzahl von X Antennengruppen mit jeweils N Dualband-Antennen (3) oder N Paaren von Singleband-Antennen (3) aufweist, wobei die Antennen eines Paares einen unterschiedlichen Frequenzbereich aufweisen, und
wobei X so gewählt wird, dass das System alle verfügbaren oder vom System als relevant erkannten Funkkanäle abdeckt,
die mobile, tragbare Einheit weiterhin mindestens einen Adapter (4) umfasst, welcher die von den Hochfrequenz-Empfängern (1) verlustfrei aufgenommenen Daten oder Datenpakete aller verfügbaren bzw. relevanten Funkkanäle aufbereitet und als Traffic-Daten einem Massenspeicher (17) eines integrierten Computers bzw. Rechners übergibt, wobei der Computer bzw. Rechner so ausgestaltet ist, dass die aufgenommenen, gespeicherten Traffic-Daten einer statistischen Auswertung nach vorgebbaren Kennwerten unterworfen werden können und die Auswertungsergebnisse, die mit einer frei definierbaren zeitlichen Auflösung, insbesondere von einer Sekunde oder weniger, ermittelt werden können, in einer systemimmanenten Datenbank abgelegt werden, wobei bei erkannten Auffälligkeiten der Datenverkehr bzw. die Traffic-Daten um den Auffälligkeitszeitpunkt herum abgerufen und zur weiteren Analyse bereitgestellt werden können.

2. System nach Anspruch 1,
**dadurch gekennzeichnet, dass**
selbiges im dynamischen, statischen oder Überwachungsmodus betreibbar ist, wobei
- im dynamischen Modus nach dem Erkennen relevanter Funknetzkanäle ein WLAN-Adapter die Luftschnittstelle scannt und überprüft, ob und welche Änderungen in den verwendeten Kanälen vorgenommen wurden, um eine Anpassung der Kanalauswahl und deren Einstellung vorzunehmen;
- im statischen Modus grundsätzlich alle im zu überwachenden Funknetz vorhandenen Kanäle aufgenommen werden; und
- im Überwachungsmodus die Aufnahme des Traffics anhand einer vorgegebenen Liste von Access Points oder Clients nebst deren Priorisierung erfolgt.

3. System nach Anspruch 1 oder 2,
**dadurch gekennzeichnet, dass**
die Kennwerte mindestens Folgendes umfassen:
Auslastung des Funkkanales, stattgefundene Kanalwechsel, Anzahl der Clients pro Access Point, Anzahl der gleichzeitig aktiven Clients, Belegung des Funkkanals durch jeden einzelnen Client, prozentuale Anzahl der Paketwiederholungen bei den Clients, Bewertung des Management-Traffics pro Client.

4. System nach einem der vorangegangenen Ansprüche,
**dadurch gekennzeichnet, dass**
für alle oder ausgewählte Clients anhand von Erfahrungswerten abgeleitete Fehler bzw. Traps geloggt werden, wozu beispielsweise gehören die Unterbrechung der Kommunikation, ein Roaming, mehrfaches Roaming innerhalb eines vorgegebenen Zeitintervalls, nicht erfolgreiches Roaming sowie Auffälligkeiten bei der Übertragung eines definierten Test-Traffics.

5. System nach einem der vorangegangenen Ansprüche,
**dadurch gekennzeichnet, dass**
in die Datenbank kundenspezifische Informationen importierbar sind.

6. System nach einem der vorangegangenen Ansprüche,
**dadurch gekennzeichnet, dass**
eine Langzeitstatistik erstellbar ist, woraus eine Trendanalyse erfolgt,
um eine Prädiktion möglicher zukünftiger Engpässe oder Problemfälle vorzunehmen.

7. System nach einem der vorangegangenen Ansprüche,
**dadurch gekennzeichnet, dass**
dieses mit einem echtzeitfähigen Spektrum-Analysator (20) in Verbindung steht, um über einen vorgegebenen Zeitraum oder anhand von Ereignissen einen Spektrumsverlauf zu ermitteln und aufzuzeichnen.

8. System nach einem der vorangegangenen Ansprüche,
**dadurch gekennzeichnet, dass**
eine separate Empfängereinheit (22) vorgesehen ist, welche fremde Funksysteme und deren Störeinflüsse erkennt und mit einem Zeitstempel versehen in die Datenbank überträgt.

9. System nach einem der vorangegangenen Ansprüche,
**dadurch gekennzeichnet, dass**
die Hochfrequenz-Empfänger (1) einen Bandpassfilter (20) und einen Vorverstärker (21) aufweisen.

10. System nach einem der vorangegangenen Ansprüche,
**dadurch gekennzeichnet, dass**
eine Analyse von Funknetzauffälligkeiten bei der Übertragung eines im Vorfeld definierten Test-Traffics vornehmbar ist.

11. Verwendung eines Systems nach einem der vorangegangenen Ansprüche zur Qualifizierung von Funknetzen und Funknetzstandorten sowohl aus der Sicht des Funknetznutzers als auch des Funknetzbetreibers.

## Claims

1. A system for monitoring, controlling, analyzing performance and/or tracing malfunctions in standard radio networks using the recording of the data exchange of a minimum number of channels available in each radio network, wherein at least the channel utilization and/or the number and/or duration of channel changes and/or the number of clients and/or the number of packet retransmissions is/are analyzed relative to the data exchange,
**characterized in that**
the system is implemented as a mobile, portable unit comprising a number of X radio frequency receivers (1), each comprising a MIMO NxN Capture Interface (1),
wherein the radio frequency receivers (1) are in communication with a radio frequency part (2) comprising a number of X antenna groups each having N dual band antennas (3) or N pairs of single band antennas (3), wherein the antennas of each pair have a different frequency range, and
wherein X is selected such that the system covers all available radio channels or radio channels recognized by the system as being relevant,
the mobile, portable unit furthermore comprises at least one adapter (4) processing the data recorded free from loss by the radio frequency receivers (1) or data packets of all available or relevant radio channels and transfers them as traffic data to a mass memory (17) of an integrated computer or data processor,
wherein the computer or data processor is designed such that the recorded, stored traffic data can be subjected to a statistical evaluation according to characteristic values that can be defined in advance, and the results of the evaluation which can be determined by means of a freely definable temporal resolution, in particular of one second or less, are filed in a system-immanent data base, wherein when anomalies are recognized, the data traffic of the traffic data around the point of time of anomality can be retrieved and provided for further analysis.

2. The system according to claim 1,
**characterized in that**
said system may be operated in a dynamic, static or control mode, wherein
- in the dynamic mode, after recognizing relevant radio channels, a WLAN adapter scans the air interface and checks if and which changes have been made in the employed channels, so as to adapt the channel selection and the setting thereof;
- in the static mode, in principle, all of the channels present in the radio network to be controlled are recorded; and
- in the control mode, the recording of the traffic is realized on the basis of a predefined list of access point or clients along with their prioritization.

3. The system according to claim 1 or 2,
**characterized in that**
the characteristic values comprise at least:
utilization of the radio channel, occurred channel changes, number of clients per access point, number of simultaneously active clients, occupancy of the radio channel by each individual client, percentage number of packet retransmission at the clients, evaluation of the management traffic per client.

4. The system according to anyone of the preceding claims,
**characterized in that**
for all or selected clients, errors or traps derived from empirical values are logged, which include, for instance, the interruption of the communication, roaming, repeated roaming within a predefined interval of time, unsuccessful roaming as well as anomalies in transferring a defined test traffic.

5. The system according to anyone of the preceding claims,
**characterized in that**
customer-specific information may be imported into the database.

6. The system according to anyone of the preceding claims,
**characterized in that**
long-term statistics may be set up based on which a trend analysis is performed so as to make a prediction on potential future bottlenecks or problematic cases.

7. The system according to anyone of the preceding claims,
**characterized in that**
said system is connected to a real-time capable spectrum analyzer (20) so as to determine and record a spectrum progress for a predefined period of time or on the basis of events.

8. The system according to anyone of the preceding claims,
**characterized in that**
a separate receiver unit (22) is provided which identifies extraneous radio systems and the interfering influences thereof and transfers them into the database with an applied time stamp.

9. The system according to anyone of the preceding claims,
**characterized in that**
the radio frequency receivers (1) feature a band pass filter (20) and a preamplifier (21).

10. The system according to anyone of the preceding claims,
**characterized in that**
an analysis of radio network anomalies may be performed when transferring a test traffic defined in advance.

11. Use of a system according to anyone of the preceding claims,
for qualifying radio networks and radio network locations both from the radio network user's and the radio network operator's perspective.

## Revendications

1. Système pour assurer le contrôle, la surveillance, l'analyse de capacité et/ou le dépistage de pannes dans des réseaux radio standardisés par enregistrement de l'échange de données d'un nombre minimum de canaux disponibles dans le réseau radio respectif, sachant que, relativement à l'échange de données, au moins le taux d'utilisation de canal et/ou le nombre et/ou la durée de changements de canal et/ou le nombre de clients et/ou le nombre de répétitions de paquets est évalué,
**caractérisé en ce que**
le système est constitué comme unité mobile portable, laquelle présente un nombre de X récepteurs haute fréquence (1) qui présentent respectivement une interface MIMO NxN Capture (1),
sachant que les récepteurs haute fréquence (1) sont en liaison avec une partie haute fréquence (2) qui présente un nombre de X groupes d'antennes comportant respectivement N antennes à bande double (3) ou N paires d'antennes à bande simple (3), sachant que les antennes d'une paire présentent une plage de fréquence différente, et
sachant que X est choisi de telle sorte que le système couvre tous les canaux radio disponibles ou détectés comme pertinents par le système,
l'unité mobile portable comprend en outre au moins un adaptateur (4), lequel traite les données ou paquets de données enregistrés sans perte par les récepteurs haute fréquence (1) de tous les canaux radio disponibles ou pertinents et les transmet comme données de trafic à une mémoire de masse (17) d'un ordinateur ou calculateur intégré,
sachant que l'ordinateur ou calculateur est configuré de telle sorte que les données de trafic mémorisées enregistrées puissent être soumises à une évaluation statistique selon des valeurs caractéristiques spécifiables et les résultats d'évaluation, qui peuvent être déterminés avec une résolution temporelle librement définie, en particulier d'une seconde ou moins, sont stockés dans une base de données immanente au système, sachant qu'en cas d'anomalies détectées, le flux de données ou les données de trafic peuvent être consultés autour du moment d'anomalie et mis à disposition pour l'analyse ultérieure.

2. Système selon la revendication 1,
**caractérisé en ce que**
celui-ci est exploitable dans le mode dynamique, statique ou de surveillance, sachant que
- dans le mode dynamique, après la détection de canaux de réseau radio pertinents, un adaptateur WLAN scrute l'interface hertzienne et vérifie si et quelles modifications ont été effectuées dans les canaux utilisés afin de procéder à une adaptation de la sélection de canal et à son réglage ;
- dans le mode statique, tous les canaux présents dans le réseau radio à surveiller sont en principe enregistrés ; et
- dans le mode de surveillance, l'enregistrement du trafic est effectué sur la base d'une liste spécifiée de points d'accès ou de clients, en plus de leur priori sation.

3. Système selon la revendication 1 ou 2,
**caractérisé en ce que**
les valeurs caractéristiques comprennent au moins ce qui suit :
taux d'utilisation du canal radio, changement de canal effectué, nombre de clients par point d'accès, nombre de clients actifs simultanément, affectation du canal radio par chaque client individuel, pourcentage de répétitions de paquets chez les clients, évaluation du trafic de gestion par client.

4. Système selon l'une des revendications précédentes,
**caractérisé en ce que**
pour tous les clients ou pour des clients sélectionnés, des erreurs ou pièges dérivés de valeurs d'expérience sont journalisés, ce dont fait partie par exemple l'interruption de la communication, une itinérance, une itinérance multiple au sein d'un intervalle de temps spécifié, une itinérance non concluante ainsi que des anomalies lors de la transmission d'un trafic de test défini.

5. Système selon l'une des revendications précédentes,
**caractérisé en ce que**
des informations spécifiques à un client sont importables dans la base de données.

6. Système selon l'une des revendications précédentes,
**caractérisé en ce que**
une statistique à long terme peut être établie, à partir de quoi une analyse de tendance est effectuée afin de procéder à une prédiction de goulots d'étranglement ou de cas problématiques éventuels futurs.

7. Système selon l'une des revendications précédentes,
**caractérisé en ce que**
celui-ci est en liaison avec un analyseur de spectre (20) pouvant opérer en temps réel afin de déterminer et d'enregistrer un profil de spectre sur une période spécifiée ou sur la base d'événements.

8. Système selon l'une des revendications précédentes,
**caractérisé en ce que**
une unité réceptrice (22) distincte est prévue, laquelle détecte des systèmes radio étrangers et leurs influences perturbatrices et les transmet, pourvus d'une estampille temporelle, à la base de données.

9. Système selon l'une des revendications précédentes,
**caractérisé en ce que**
les récepteurs haute fréquence (1) présentent un filtre passe-bande (20) et un préamplificateur (21).

10. Système selon l'une des revendications précédentes,
**caractérisé en ce que**
une analyse d'anomalies de réseau radio peut être effectuée lors de la transmission d'un trafic de test défini préalablement.

11. Utilisation d'un système selon l'une des revendications précédentes pour qualifier des réseaux radio et des sites de réseau radio aussi bien du point de vue de l'utilisateur de réseau radio que de celui de l'exploitant de réseau radio.
